# EUROPEAN PATENT SPECIFICATION

(11) **EP 1 121 220 B1**
(45) Date of publication and mention of the grant of the patent: **10.11.2004**
(21) Application number: 00954087.3
(22) Date of filing: 14.08.2000
(51) Int. Cl.: B23K 10/02, H01K 1/42, H01J 5/62

(54) **WELDING OF LAMP LEADS TO STRANDED WIRES**
VERSCHWEISSEN VON LAMPENLEITERN MIT LITZENDRÄHTEN
SOUDAGE DES FILS D'UNE LAMPE A DES FILS TORONNES

(30) Priority: 12.08.1999 US 148634 P
(43) Date of publication of application: 08.08.2001
(73) Proprietor: GENERAL ELECTRIC COMPANY, Schenectady, NY 12345 (US)
(72) Inventor: Kellner, Robert, Joseph, Mattoon, IL 61938 (US); Greenwood, Randal, Neoga, IL 62447 (US); Lagermasini, Joseph, Paul, III, Charleston, IL 61920 (US); Rachel, Bernard, White, Highland Heights, OH 44143 (US)
(74) Representative: Pedder, James Cuthbert
(86) International application number: PCT/US2000/022387
(87) International publication number: WO 2001/012377

(56) References cited:
- US-A- 3 771 018
- US-A- 4 638 150
- US-A- 5 463 270

## Description

This invention relates to the lamp arts, more particularly, this invention relates to a method of connecting a stranded lead wire to a lamp base pin and will be described with particular reference thereto. It should be appreciated, however, that the technique is also suited to the formation of electrical connections between stranded wires and other electrical components.

### Discussion of the Art

Stranded wires, that is, wires formed from multiple strands of thin wire, generally shielded by an electrical insulator, are used in a number of applications for connecting lamps and other electrical appliances to a source of electricity see for example US 5 463 270 which is regarded as closest prior art. Resistance welding is generally used for forming a connection between the stranded wire and the lamp base pin. Prior to welding, a strip of the insulation is removed at the end of the stranded wire and a metal welding strap or collar is placed around the loose, exposed strands to form a bundle. An electric current is then passed across the stranded wire and the lamp base pin to resistance heat the two components. Such stranded wire connections are used, for example, in aircraft runway markers where it is important to have a long, effective life.

However, this technique tends to result in poor weld reliability. First, the welding strap is compressed during welding and the seam, where ends of the straps meet, tends to open, allowing some of the wire strands to escape. As a result, the connection is not as electrically efficient as it could be if all the strands were included. Second, the weld does not melt the entire bundle of strands, sometimes leading to poor mechanical strength of the weld, and poor passage of the current. This is because, during heating, the current takes the path of least resistance and it is at this point where the weld is formed. Therefore, the extent and position of the weld is often undefined. These problems result in a number of welded connections being rejected.

The present invention provides a new and improved method of connecting stranded wires to lamp wires and which overcomes the above referenced problems and others.

### BRIEF SUMMARY OF THE INVENTION

This application is directed to a method for connecting a lamp base pin to a stranded wire which includes plasma welding the stranded wire to the pin.

One advantage of the present invention is the provision of a new and improved method of attaching stranded lead wires to lamp pins which is reliable and reproducible.

Another advantage of the present invention is the provision of a weld with higher mechanical strength and an improved electrical path.

### BRIEF DESCRIPTION OF THE DRAWINGS

FIGURE 1 is an exploded front view of a lamp assembly;
FIGURE 2 is an alternative embodiment of lamp base pins attached to stranded wires, according to the present invention;
FIGURE 3 is another alternative embodiment of lamp base pins attached to stranded wires, according to the present invention; and
FIGURE 4 is a schematic view of a system for welding stranded wires to lamp base pins.

### DETAILED DESCRIPTION OF THE INVENTION

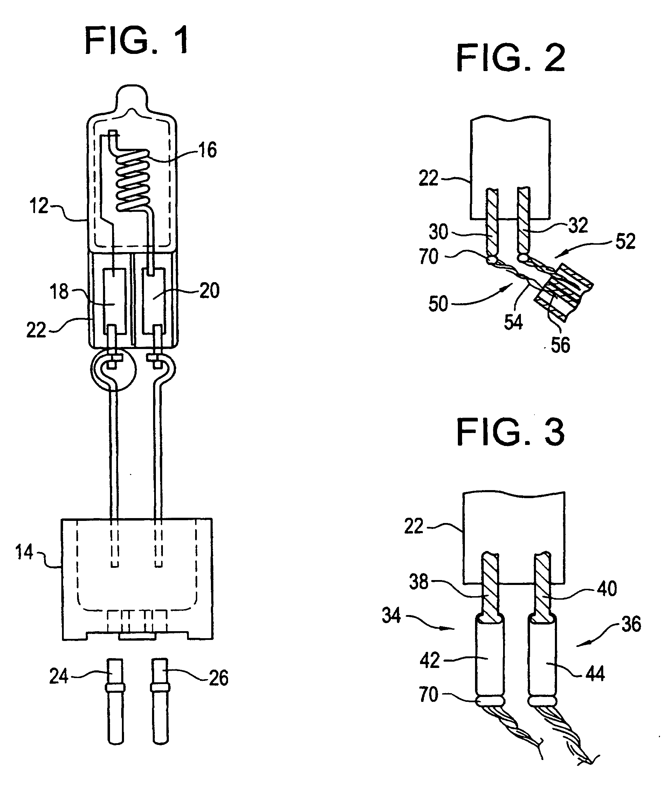

With reference to FIGURE 1, a lamp or light source A includes an envelope **12**, optically aligned and cemented in reflector base **14**. A light emitting filament **16** is enclosed within the envelope. Filament leads **18, 20** hermetically sealed in a seal region **22** of the envelope, electrically connect the filament **16** with lamp base pins **24, 26,** here shown in the form of hollow nickel sleeves. The lamp base pins extend externally of the base **14** and/or seal region **22** for connecting the filament with a source of electrical power.

With reference also to FIGURES 2, and 3, and the lamp base pins may be formed in a variety of different geometries. FIGURE 2 shows a pair of solid lamp base pins **30, 32**, while FIGURE 3 shows lamp pins **34**, **36**, in which external ends of solid, connecting leads **38, 40** are each capped at their free ends with a hollow sleeve or ferrule **42, 44**. The lamp pins can be formed from a variety of materials, such as nickel, molybdenum, nickel plated copper, or silver plated copper. For example, the lamp pins **24, 26** of FIGURE 1 may be nickel, the base pins **30, 32** of FIGURE 2, molybdenum, and the composite pins **34, 36** of FIGURE 3, molybdenum for the connecting pins and nickel for the ferrules **42, 44**.

With particular reference to FIGURES 2 and 3, a pair of stranded lead wires **50, 52** are attached to the lamp pins. The stranded lead wires can be formed form a variety of materials. The wire includes a core **54** of multiple strands of conductive metal, such as copper, nickel plated with copper, or a high nickel composition, such as a 90% nickel composition. The strands are preferably twisted together to form a compact wire. The core **54** is surrounded by a layer of insulation 56.

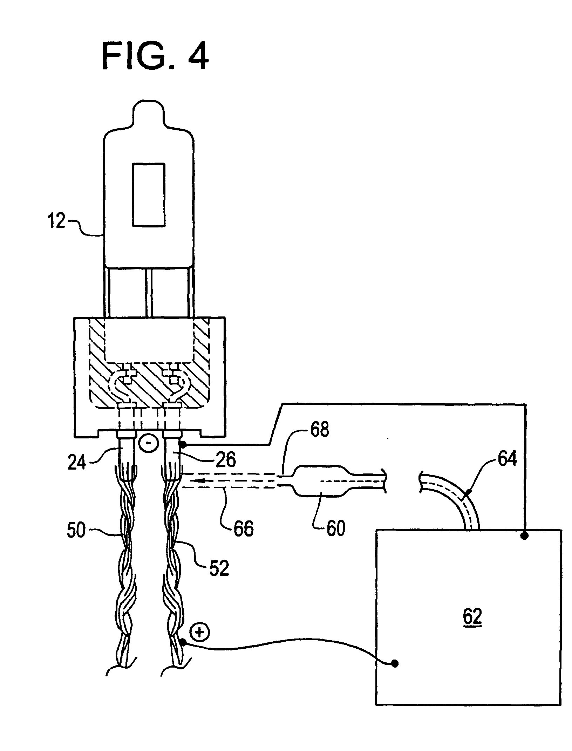

With reference now to FIGURE 4, the weld is created by plasma welding using a plasma beam. The stranded wire **50, 52** and the corresponding lamp pin **24, 26, 30, 32, 34, 36** are overlapped by a distance sufficient for forming a weld. This distance is preferably about 0.5 to 5 millimeters, more preferably, an overhang of about 1 millimeter is used. A plasma welding torch **60** is positioned about one to two centimeters from the overlapping wire and a generator **62** generates an argon plasma **64**. The plasma gas is fed to the torch at a flow rate of about 0.1 to 0.3 1/min. It is ionized and fired at the overlap as a beam **66** of plasma ions from a nozzle **68** of the torch. An inert forming gas, such as a mixture of argon and hydrogen, preferably a 80:20 mix, surrounds the plasma beam **66**. The nozzle **68** aids in focusing the beam to a cross section of desired width for forming the weld. A potential is applied across the stranded wire **50, 52** and corresponding pin **24, 26, 30, 32, 34, 36** wire while the weld is formed. The overlap section melts and forms a homogeneous weld **70**, as shown in FIGURES 2 and 3. The plasma welding creates a solid nugget **70** at the end of the stranded lead wire while it is melting. This ensures capturing all the wire strands creating a greatly improved electrical path and a higher strength mechanical junction.

The resulting weld has high mechanical strength, few unincorporated stranded wires, and a resulting high electrical conductivity. The method allows the nickel ferrule **42, 44** as shown in FIGURE 3 to be optionally eliminated. Traditionally, the ferrule is added to improve formation of the weld during resistance welding.

The exemplary embodiment of the invention as described is particularly useful in environments where a constant current or high current on the order of greater than 6.0 amps, or more particularly about 6.6 amps, is encountered. In addition, environments where extreme vibrations or G forces are encountered is another important consideration in using the plasma weld. The prior resistance welded arrangement was simply unacceptable and unreliable since the contacts in a porcelain socket added resistance and heat to the assembly. The plasma welded assembly of the present invention, on the other hand, provides a more reliable connection between the external pins of the lamp and the fixture

The invention has been described with references to the preferred embodiment. Obviously, modifications and alterations will occur to others upon reading and understanding the preceding detailed description. It is intended that the invention be construed as including all such modifications and alterations insofar as they come within the scope of the appended claims.

## Claims

1. A lamp assembly for use in constant current and high current environments, the lamp assembly comprising:
a light source (A) having a light transmissive envelope (12);
first and second pins (24, 26) associated with the light source and having first ends disposed in sealed relation with the envelope and second ends extending therefrom; and
first and second stranded wires (50, 52) for electrically interconnecting the first and second pins, respectively, to an associated fixture, **characterized in** the first and second stranded wires being plasma welded (70) to the pins to enhance the electrical path through the lamp assembly.

2. The lamp assembly of claim 1 wherein the stranded wires (50, 52) are one of copper, nickel plated with copper, and high nickel composition.

3. The lamp assembly of claim 1 wherein the light source _(A) includes first and second lead wires (18, 20) extending from the first and second pins, respectively, the lead wires secured to opposite ends of a filament (16).

4. The lamp assembly of claim 1 wherein the first and second pins (24, 26) are molybdenum lamp leads extending from sealed relation with the envelope.

5. The lamp assembly of claim 4 further comprising first and second nickel sleeves (42, 44) received over the molybdenum lamp leads and the lamp leads, nickel sleeves and stranded wires being welded to form a homogenous nugget of all three components.

6. The lamp assembly of claim 1 wherein the first and second pins (24, 26) are nickel lamp leads (30, 32) extending from sealed relationship with the envelope and welded to the stranded wires.

7. A method of forming a lamp assembly having a light source (A) that includes a light transmissive envelope (12), first and second pins (24, 26) extending from sealed relation with the envelope, and first and second stranded wires (50, 52) for electrically interconnecting the first and second pins, respectively, to an associated fixture, the method comprising the steps of:
overlapping the first and second pins with the first and second stranded wires, respectively;
positioning a plasma torch closely adjacent the overlapped wires and pins: and
welding the wires and pins together to form a homogenous nugget of material.

8. The method of claim 7 wherein the overlapping step includes positioning the pins and wires with an overlap of about 0.5 to 5 millimeters.

9. The method of claim 8 wherein the overlapping step includes positioning the pins and wires with an overlap of about 1.0 millimeter.

10. The method of claim 7 comprising the further step of applying an electrical potential across the stranded wires during the welding step.

11. The method of claim 7 wherein the welding step includes surrounding the pins and wires with an inert gas during the welding step.

## Patentansprüche

1. Lampeneinrichtung zur Verwendung in Konstantstrom- und Hochstrom-Umgebungen, wobei die Lampeneinrichtung enthält:
eine Lichtquelle (A) mit einem lichtdurchlässigen Mantel (12),
erste und zweite Stifte (24,26), die der Lichtquelle zugeordnet sind und erste Enden, die in einer gekapselten Relation zum Mantel angeordnet sind, und zweite Enden haben, die davon ausgehen, und
erste und zweite Litzendrähte, 50,52) zum elektrischen Verbinden der ersten bzw. zweiten Stifte mit einer Halterung, **dadurch gekennzeichnet, daß** die ersten und zweiten Litzendrähte an den Stiften plasmageschweißt (70) sind, um die elektrische Strombahn durch die Lampeneinrichtung zu verbessern.

2. Lampeneinrichtung nach Anspruch 1, wobei die Litzenleiter (50,52) welche aus Kupfer, Nickel plattiert mit Kupfer und einer nickelreichen Zusammensetzung sind.

3. Lampeneinrichtung nach Anspruch 1, wobei die Lichtquelle (A) erste und zweite Leiterdrähte (18,20) aufweist, die von den ersten bzw. zweiten Stiften ausgehen, wobei die Leiterdrähte an gegenüber liegenden Enden von einem Glühfaden (16) befestigt sind.

4. Lampeneinrichtung nach Anspruch 1, wobei die ersten und zweiten Stifte (24,26) Molybdän-Lampenleiter sind, die von der gekapselten Relation mit dem Mantel ausgehen.

5. Lampeneinrichtung nach Anspruch 4, wobei ferner erste und zweite Nickelhülsen (42,44) vorgesehen sind, die über den Molybdän-Lampenleitern aufgenommen sind, wobei die Lampenleiter, Nickelhülsen und Lampendrähte geschweißt sind, um einen homogenen Klumpen von allen drei Komponenten zu bilden.

6. Lampeneinrichtung nach Anspruch 1, wobei die ersten und zweiten Stifte (24,26) Nickel-Lampenleiter (30,32) sind, die von der gekapselten Relation mit dem Mantel ausgehen und an den Litzendrähten angeschweißt sind.

7. Verfahren zum Bilden einer Lampeneinrichtung zur Verwendung mit einer Lichtquelle (A), die einen lichtdurchlässigen Mantel (12), erste und zweite Stifte (24,26), die von einer gekapselten Relation zum Mantel ausgehen, und erste und zweite Litzendrähte (50,52) zum elektrischen Verbinden der ersten bzw. zweiten Stifte mit einer Halterung aufweist, wobei das Verfahren die Schritte enthält:
Überlappen der ersten und zweiten Stifte mit den ersten bzw. zweiten Litzendrähten,
Anordnen eines Plasmabrenners nahe neben den überlappten Drähten und Stiften und
Zusammenschweißen der Drähte und Stifte, um einen homogenen Materialklumpen zu bilden.

8. Verfahren nach Anspruch 7, wobei der Überlappungsschritt enthält, daß die Stifte und Drähte mit einer Überlappung von etwa 0,5 bis 5 Millimeter angeordnet werden.

9. Verfahren nach Anspruch 8, wobei der Überlappungsschritt enthält, daß die Stifte und Drähte mit einer Überlappung von etwa 1,0 Millimeter angeordnet werden.

10. Verfahren nach Anspruch 7, wobei der weitere Schritt vorgesehen ist, daß während des Schweißschrittes ein elektrisches Potential über den Litzendrähten angelegt wird.

11. Verfahren nach Anspruch 7, wobei der Schweißschritt enthält, daß während des Schweißens die Stifte und Drähte mit einem Inertgas umgeben werden.

## Revendications

1. Ensemble de lampe pour utiliser dans des environnement de courant constant et de courant élevé, l'ensemble de lampe comprenant :
une source lumineuse (A) ayant une enveloppe translucide (12) ;
des première et seconde broches (24, 26) associées avec la source lumineuse et ayant des première et seconde extrémités disposées en relation étanche avec l'enveloppe et des secondes extrémité s'étendant depuis celles-ci ; et
des premier et second fils toronnés (50, 52) pour interconnecter électriquement les première et seconde broches, respectivement, à une fixation associée, **caractérisé en ce que** les premier et second fils toronnés sont soudés par plasma (70) aux broches pour améliorer le trajet électrique à travers l'ensemble de lampe.

2. Ensemble de lampe selon la revendication 1 dans lequel les fils toronnés (50, 52) sont en cuivre, en nickel plaqué de cuivre, et en nickel à haute teneur.

3. Ensemble de lampe selon la revendication 1 dans lequel la source lumineuse (A) comprend des premier et second fils de sortie (18, 20) s'étendant depuis les première et seconde broches, respectivement, les fils de sortie étant fixés aux extrémités opposées d'un filament (16).

4. Ensemble de lampe selon la revendication 1 dans lequel les première et seconde broches (24, 26) sont des entrées de courant en molybdène s'étendant depuis une relation étanche avec l'enveloppe.

5. Ensemble de lampe selon la revendication 4 comprenant en outre des premier et second manchons en nickel (42, 44) reçus sur les entrées de courant en molybdène et les entrées de courant, les manchons en nickel et les fils toronnés étant soudés pour former un noyau homogène de tous les trois composants.

6. Ensemble de lampe selon la revendication 1 dans lequel les première et seconde broches (24, 26) sont des entrées de courant en nickel (30, 32) s'étendant depuis une relation étanche avec l'enveloppe et soudée aux fils toronnés.

7. Procédé pour former un ensemble de lampe ayant une source lumineuse (A) qui comprend une enveloppe translucide (12), des première et seconde broches (24, 26) s'étendant depuis la relation étanche avec l'enveloppe, et des premier et second fils toronnés (50, 52) pour interconnecter électriquement les première et seconde broches, respectivement, à une fixation associée, le procédé comprenant les étapes consistant à :
recouvrir les première et seconde broches avec les premier et second fils toronnés ; et
positionner une torche à plasma très proche des fils et des broches superposés ; et
souder les fils et les broches ensemble pour former un noyau de matériau homogène.

8. Procédé selon la revendication 7 dans lequel l'étape de recouvrement comprend de positionner les broches et les fils avec un recouvrement d'environ 0,5 à 5 millimètres.

9. Procédé selon la revendication 8 dans lequel l'étape de recouvrement comprend de positionner les fils et les broches avec un recouvrement d'environ 1,0 mm.

10. Procédé selon la revendication 7 comprenant en outre l'autre étape consistant à appliquer un potentiel électrique aux bornes des fils toronnés pendant l'étape de soudage.

11. Procédé selon la revendication 7 dans lequel l'étape de soudage comprend d'entourer les broches et les fils avec un gaz inerte pendant l'étape de soudage.
